Europäisches Patentamt

European Patent Office

Office européen des brevets

(19)

(11) EP 0 997 268 A1

(12) DEMANDE DE BREVET EUROPEEN

(43) Date de publication:
03.05.2000 Bulletin 2000/18

(51) Int Cl.7: **B32B 27/32**, C08L 23/16,
C08L 77/02, C08J 5/18,
C08L 77/00

(21) Numéro de dépôt: 99402393.5

(22) Date de dépôt: 30.09.1999

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **26.10.1998 FR 9813367**

(71) Demandeur: **Elf Atochem S.A.**
**92800 Puteaux (FR)**

(72) Inventeurs:
• **Bouilloux, Alain**
**27300 Bernay (FR)**

• **Andre, Jean-Marc**
**27000 Evreux (FR)**
• **Teze, Laurent**
**78700 Conflans Sainte Honorine (FR)**

(74) Mandataire: **Neel, Henry et al**
**Elf Atochem S.A.,**
**DCRD/DPI,**
**Cours Michelet,**
**La Défense 10**
**92091 Paris La Défense Cedex (FR)**

(54) **Films comprenant du polyethylene metallocene et du polyamide**

(57)    La présente invention concerne un film comprenant au moins une couche (A) d'un mélange de polyamide et de polyéthylène et éventuellement une couche (B) de polyéthylène et tel que si le polyéthylène de la couche (A) n'est pas un métallocène alors la couche (B) est obligatoire et elle est essentiellement constituée de polyéthylène métallocène.

Ces films sont utiles pour le moulage des polyesters, la fumigation ou faire des emballages.

EP 0 997 268 A1

## Description

La présente invention concerne des films comprenant du polyéthylène métallocène et du polyamide. Le film peut être monocouche ou multicouches.

La présente invention est un film mono ou multicouches comprenant du polyéthylène métallocène, au moins une couche (A) d'un mélange de polyamide et de polyéthylène, éventuellement une couche (B) de polyéthylène dans lequel le polyéthylène métallocène est dans la couche (A) et/ou dans la couche (B).

Autrement exprimé la présente invention est un film comprenant au moins une couche (A) d'un mélange de polyamide et de polyéthylène et éventuellement une couche (B) de polyéthylène et telle que si le polyéthylène de la couche (A) n'est pas un métallocène alors la présence de la couche (B) est nécessaire et elle est essentiellement constituée de polyéthylène métallocène.

Selon une première forme le film de l'invention comprend au moins une couche (A) d'un mélange de polyamide et de polyéthylène métallocène.

Selon une deuxième forme le film de l'invention comprend la couche précédente (A) et au moins une couche (B) de polyéthylène. Avantageusement cette couche (B) est en polyéthylène métallocène.

Selon une troisième forme le film de l'invention comprend une couche (A) d'un mélange de polyamide et de polyéthylène métallocène entre deux couches (B) de polyéthylène, l'une ou l'autre ou les deux pouvant être en polyéthylène métallocène.

Selon une quatrième forme le film de l'invention comprend une couche (B) de polyéthylène entre deux couches (A) d'un mélange de polyamide et de polyéthylène métallocène, la couche centrale (B) pouvant être en polyéthylène métallocène.

Selon une cinquième forme le film de l'invention comprend au moins une couche (A) d'un mélange de polyamide et de polyéthylène qui n'est pas métallocène et au moins une couche (B) de polyéthylène métallocène.

Selon une forme avantageuse de cette cinquième forme de l'invention la couche (A) est disposée entre deux couches (B) de polyéthylène métallocène.

Selon une autre forme avantageuse de cette cinquième forme de l'invention la couche (A) est disposée entre une couche (B) de polyéthylène métallocène et une autre couche (B) de polyéthylène non métallocène

Selon une autre forme avantageuse de cette cinquième forme la couche centrale (B) de polyéthylène métallocène est disposée entre deux couches (A).

Les films de l'invention sont utiles dans la technologie SMC (sheet moulding compound).

Le SMC est utilisé dans la fabrication de pièces transformées aussi bien dans les domaines automobile (parechocs, hayons...) que ceux du nautisme (coques de bateaux) ou de l'électronique (carters).

Le SMC est généralement composé d'une résine polymère réticulable, en particulier un polyester insaturé, de charges de renforcement telles que des fibres de verre, ainsi que de divers autres additifs en quantités peu importantes.

Le SMC est ordinairement préparé en déposant des fibres sur une couche de résine polyester non saturé, elle-même supportée sur un film mobile, composé en général de polyéthylène ou de polyamide.

Un autre film de même nature est ensuite déposé au-dessus du système résine/charge de renforcement pour former une masse composite en sandwich entre deux films. Le sandwich passe ensuite à travers une série de rouleaux de pétrissage et de compactage et est généralement enroulé sous forme de grands rouleaux.

Il est alors stocké avant transformation ultérieure. Lors de la période de stockage, la résine polyester réticule partiellement, provoquant une augmentation de la viscosité du SMC, jusqu'à atteindre une consistance le rendant apte au moulage.

Les utilisateurs de SMC, en général les mouleurs, coupent un morceau de dimensions appropriées à partir du rouleau, retirent par pelage le film de support et placent le SMC dans un moule chauffé pour la transformation et la cuisson complète simultanées. Ainsi, des masses composites en sandwich de SMC trouvent une application facile dans des modes opératoires de moulage par compression.

Trois propriétés concernant le film sandwich sont d'importance capitale pour les fabricants et les utilisateurs de SMC.

La première a trait à la perméabilité au styrène du film pelable. Il est nécessaire que ce film pelable ait une perméabilité au styrène très faible afin d'éviter la perte de styrène monomère qui joue le rôle d'agent de réticulation dans le SMC. Cette perte de styrène monomère est également préjudiciable pour la santé des individus lors des opérations de fabrication du SMC et de son stockage.

La deuxième propriété concerne la facilité de pelage de ce film sur la structure polyester, afin qu'il ne subsiste pas de film résiduel sur la structure et d'éviter les risques de déchirure de ce film lors des opérations de fabrication et de transformation du SMC.

Enfin, la reprise d'humidité et la perméabilité à l'eau de ces films pelables doivent être très faibles pour que la qualité de la résine polyester, très sensible à l'eau, ne soit pas altérée lors des opérations de fabrication du SMC,

EP 0 997 268 A1

du stockage du polyester ou de la transformation du SMC.

L'art antérieur a décrit des films SMC en alliage de polyamide et de polypropylène dans le brevet européen EP 0 506 515.

Il n'y est pas décrit l'utilisation de polyéthylène métallocène.

Les films de l'invention sont aussi utiles pour la fumigation des sols. Cette technique consiste à traiter les sols par injection de gaz à environ 0,5 ou 1 m de profondeur. On recouvre le sol à traiter d'un film pour que le gaz reste plus longtemps dans le sol, ce qui permet de réduire les quantités de gaz à utiliser. L'art antérieur a décrit de tels films dans EP 0 766 913.

L'utilisation du polyéthylène métallocène n'y est pas décrite.

Les films de l'invention sont aussi utiles pour faire des emballages.

La demanderesse a découvert que l'utilisation du polyéthylène métallocène soit dans le mélange polyamide/polyéthylène soit dans la couche éventuelle de polyéthylène d'un film qui comprend aussi une couche d'un mélange de polyamide et de polyéthylène permet d'obtenir une bonne résistance à la déchirure et au DART test (c'est-à-dire la résistance à la perforation).

La présente invention concerne aussi des emballages constitués des films de l'invention ou comprenant les films de l'invention.

L'invention va maintenant être décrite en détail.

S'agissant de la couche (A) son épaisseur peut être comprise entre 5 et 150 μm.

On désigne par polyéthylène métallocène les polymères obtenus par copolymérisation d'éthylène et d'alphaoléfine telle que propylène, butène, héxène ou octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Ces polyéthylènes métallocènes peuvent aussi être caractérisés par leur rapport $\frac{\overline{M}_w}{\overline{M}_n} < 3$ et de préférence $< 2$.

On entend par polyamide les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges d'un ou plusieurs de ces monomères ce qui conduit à des copolyamides.

A titre d'exemple on peut citer le polycaprolactame (PA-6), le polylauryllactame (PA-12), le polyhexaméthylèneadipamide (PA-6,6). On peut encore citer des copolyamides tels que le PA-6/12 provenant de la condensation du caprolactame et du lauryllactame et le PA-6/6,6 provenant de la condensation du caprolactame, de l'hexaméthylènediamine et de l'acide adipique. Les copolyamides sont intéressants parce que leur température de fusion est plus basse que celle du PA-6 ou du PA-6,6 ce qui facilite la coextrusion de la couche (A) avec la (ou les) couche(s) (B).

On utilise le plus souvent le PA-6, le PA-6,6 et le PA-6/6,6.

On entend par polyéthylène tout polymère ou copolymère comprenant des motifs éthylène et éventuellement d'autres motifs greffés ou copolymérisés. Le polyéthylène métallocène a été défini plus haut.

A titre d'exemple, on peut citer :

- le polyéthylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.

- les copolymères blocs styrène / éthylène-butène / styrène (SEBS) éventuellement maléisés.

On peut utiliser des mélanges de deux ou plusieurs de ces polyoléfines.
On utilise avantageusement :

- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

Par exemple on peut utiliser :

- le polyéthylène métallocène
- le polyéthylène radicalaire LDPE
- le polyéthylène haute densité HDPE ou moyenne densité MDPE
- le polyéthylène linéaire basse densité LLDPE ou très basse densité VLDPE qui est un copolymère d'éthylène et d'une alphaoléfine choisie parmi le 1-butène, le méthyl pentène, le 1-héxène ou le 1-octène.

Selon les différentes formes de l'invention le polyéthylène métallocène peut être dans le mélange (A) avec le polyamide et/ou dans la couche (B). On ne sortirait pas du cadre de l'invention si le polyéthylène métallocène était mélangé avec un autre polyéthylène tel que par exemple un LDPE ou un copolymère éthylène - (méth)acrylate d'alkyle. La proportion de polyéthylène métallocène pouvant être de 70 à 100 parties pour 0 à 30 parties de polyéthylène non métallocène.

Le mélange de polyamide et de polyéthylène peut se présenter sous forme de deux phases cocontinues, l'une de poyamide, l'autre de polyéthylène ou sous forme de matrice de polyamide dans laquelle sont dispersés des nodules de polyéthylène.

La quantité de polyamide peut être comprise entre 40 et 70 parties pour 30 à 60 parties de polyéthylène. L'indice de fluidité à l'état fondu (MFI) du polyamide peut être compris entre 3 et 40 (en g/10 mn à 235°C sous 2,16 kg).

Le MFI du polyéthylène peut être compris entre 0,5 et 50 (en g/10 mn à 190°C sous 2,16 kg). S'agissant des nodules de polyéthylène dispersés dans la matrice en polyamide, il est recommandé d'utiliser un polyéthylène plus visqueux que le polyamide. Il peut être plus visqueux par nature ou parce qu'on augmente sa viscosité par réticulation.

Il est recommandé, pour faciliter la compatibilité du polyamide, et des polyéthylènes si elles n'ont peu ou pas de fonctions pouvant faciliter la compatibilisation, d'ajouter un agent compatibilisant.

L'agent compatibilisant est un produit connu en soi pour compatibiliser les polyamides et les polyéthylènes.

On peut citer par exemple :

- le polyéthylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé,
- les deux copolymères précédents condensés avec des polyamides ou des oligomères de polyamides ayant une seule extrémité amine,
- les deux copolymères cités plus haut (éthylène / (méth)acrylate d'alkyle ou éthylène / acétate de vinyle) dans lesquels l'anhydride maléique est remplacé par le méthacrylate de glycidyle,
- les copolymères éthylène / acide (méth)acrylique éventuellement leurs sels,
- le polyéthylène, le polypropylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets EP 342 066 et US 5342886 dont le contenu est incorporé dans la présente demande.

La quantité de compatibilisant dépend du nombre de fonctions qu'il porte et des fonctions terminales du polyamide. A titre d'exemple cette quantité peut être de 2 à 40 parties pour 100 parties de polyéthylène.

Avantageusement le compatibilisant est choisi parmi :

- les mélanges de polyéthylène et d'EPR cogreffés par un anhydride d'acide carboxylique insaturé puis ce mélange cogreffé est éventuellement dilué dans une polyoléfine. De tels produits sont décrits dans les brevets EP 0 742 236, EP 0 802 207 et EP 0 816 067
- les copolymères de l'éthylène et d'un anhydride d'acide carboxylique insaturé et éventuellement d'un ester d'acide carboxylique insaturé ou d'un ester vinylique d'acide carboxylique saturé.

A titre d'exemple d'esters d'acides carboxyliques insaturés on peut citer par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.

A titre d'exemple d'esters vinyliques d'acides carboxyliques saturés tels que par exemple l'acétate ou le propionate de vinyle, les époxydes insaturés.

Des exemples d'anhydrides d'acide carboxylique insaturé sont notamment l'anhydride maléique, l'anhydride itaconique, l'anydride citraconique, l'anydride tétrahydrophtalique.

Selon une forme préférée de l'invention le compatibilisant est un copolymère de l'éthylène, du (méth)acrylate d'alkyle et de l'anhydride maléique. Les proportions en poids des différents monomères sont respectivement 50 à 94,8 / 5 à 40 / 0,2 à 10 et le MFI peut être compris entre 2 et 15 (en g/10 mn à 190°C sous 2,16 kg).

Les proportions de polyamide, de polyéthylène et de compatibilisant sont respectivement 40 à 70 / 30 à 60 / 0 à 20 (le total étant 100).

Le mélange de la couche (A) peut être préparé par les techniques habituelles de mélange des thermoplastiques à l'état fondu par exemple dans des malaxeurs BUSS ou des extrudeuses monovis ou bivis. On ne sortirait pas du cadre de l'invention en ajoutant des antioxydants, des anti UV, des agents glissants, des charges... Le film peut être produit par extrusion soufflage ou extrusion dans une filière plate.

Le polyéthylène de la couche (B) peut être choisi parmi les polyéthylènes cités plus haut pour (A).

La couche éventuelle de polyoléfine (B) peut avoir une épaisseur de 5 à 150μm.

Le film constitué des couches (A) et (B) peut être produit par coextrusion soufflage ou coextrusion dans des filières plates.

Selon l'usage ou les caractéristiques demandées il peut être nécessaire de disposer un liant entre les couches (A) et (B).

A titre d'exemple de liant, on peut citer :

- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle.

On peut aussi ajouter à l'une ou à chacune des couches un produit qui améliore leur adhésion sans devoir utiliser une couche de liant. Ce produit peut être le liant décrit ci-dessus.

Des exemples de liants sont décrits dans les brevets EP 802207, EP 816460, EP 816067, EP 837080 et EP 742236.

S'agissant de la première forme de l'invention, l'épaisseur est avantageusement entre 30 et 80 μm pour un film utilisé en fumigation ou en SMC.

S'agissant des deuxième à cinquième formes de l'invention l'épaisseur de la (des) couche(s) (A) est avantageusement de 5 à 50 μm et celle de la (des) couche(s) (B) est avantageusement de 5 à 80 μm.

Exemples

Les matières utilisées dans les exemples sont les suivantes :

PA-6 : polyamide 6 de MFI 20 (en g/10 mn à 235°C sous 2,16 kg)
LLDPE 7209AA : polyéthylène basse densité linéaire, copolymère d'éthylène et de 4-méthylpentène-1 de MFI 0,9 g/10 mn, de densité 0,920
LDPE FE 8000 : polyéthylène radicalaire de densité 0,924 et de MFI = 0,8

LDPE 1003 FN23 : polyéthylène radicalaire de densité 0,923 et de MFI = 0,3

Engage 8150 : polyéthylène métallocène de densité 0,87 et MFI 0,5 (ASTM D - 1238)

Clearflex FFDO : polyéthylène de densité 0,9 et de MFI 0,8

Exceed ECD 103 : polyéthylène métallocène procédé phase gaz de densité 0,917 et MFI 1 (ASTM D - 1238)

Dowlex 2045E : polyéthylène basse densité linéaire de densité 0,919 et de MFI = 0,97

Lotader 3210 : copolymère de l'éthylène, de l'acrylate de butyle et de l'anhydride maléique de proportions en poids 91/6/3 et MFI 5 (190°C - 2,16 kg)

Lotader 3410 : copolymère de l'éthylène, de l'acrylate de butyle et de l'anhydride maléique de proportions en poids 79/18/3 et de MFI 5 (190°C - 2,16 kg)

Anti 51 : désigne l'IRGANOX 1098 de CIBA SPECIALITY (antioxydant)

Anti 82 :désigne l'HOSTANOX PAR 24 de HOECHST (antioxydant)

LE 6000 : désigne un alliage 65 % PA6 / 25 % PE 7209AA/10 % Lotader 3210.

Les compositions en poids de différents mélanges (A) de polyamide et de polyoléfine sont rassemblés sur le tableau 1. Ces mélanges ont été faits sur une extrudeuse WERNER 40 puis on a préparé des films d'épaisseur 50 µm à l'aide d'une machine d'extrusion soufflage KAUFMAN. Les résultats sont sur le tableau 2. Les tableaux 3 et 4 concernent des films multicouches.

Dans ces tableaux les valeurs ont été déterminées selon les méthodes suivantes :

DART test : NFT 54109 A et B

Brillance : un film de 50 µm est placé sur une mousse noire (brillance 0 %) et on mesure sous un angle de 60°. La valeur doit être la plus élevée possible

Traction : ISO 527 bandelette de 15 mm vitesse de traction 500 mm/mn

Déchirure : NFT 54-141

Haze : désigne l'inverse de la translucidité ; doit être la plus élevée possible.

Le tableau 3 concerne des films tricouche constitués d'une couche centrale (A) en polyamide et polyéthylène non métallocène entre deux couches de polyéthylène soit du basse densité soit du métallocène.

Le tableau 4 concerne des films proches de ceux du tableau 3 mais on a disposé une couche de liant de coextrusion entre la couche centrale (A) et chaque couche extérieure de polyéthylène. Le liant utilisé est l'OREVAC® 18302 d'ELF ATOCHEM, c'est un mélange de LLDPE et d'EPR en proportion en poids 75/25 cogreffé par 0,4 % d'anhydride maléique et de MFI 1 (190°C - 2,16 kg).

Tableau 1

| Exemples | 1 | 2 | 3 | 4 | 5 |
|---|---|---|---|---|---|
| PA6 | 65 | 65 | 65 | 65 | 65 |
| | | | | | |
| PE FE 8000 | 25 | | | | |
| PE 1003 FE 23 | | 25 | | | |
| PE 7209 AA | | | 25 | | |
| PE Clearflex FFDO | | | | 25 | |
| PE Engage 8150 | | | | | 25 |
| | | | | | |
| Lotader 3410 | 10 | 10 | 10 | 10 | 10 |
| | | | | | |
| Anti 51 | 0,5 | 0,5 | 0,5 | 0,5 | 0,5 |
| Anti 82 | 0,2 | 0,2 | 0,2 | 0,2 | 0,2 |

| Film 50 μm Exemples | Dart test | | Brillance | | Traction | | | | | | | | | Déchirure | | | | Haze | |
|---|---|---|---|---|---|---|---|---|---|---|---|---|---|---|---|---|---|---|---|
| | Masse | Méthode | % | écart type | Sens long | | | | sens trans | | | | sens long | | sens trans | | | |
| | en gramme | | | | F rupture en MPa | écart type | Allongement rupture en % | écart type | F rupture en MPa | écart type | Allongement rupture en % | écart type | Force en cN | écart type | Force en cN | écart type | % | écart type |
| 1 | 147.5 | A | 29.3 | 0.2 | 54.5 | 3.9 | 437 | 34 | 38.8 | 1.4 | 437 | 15 | 25.6 | 8.3 | 246.4 | 16.7 | 29.3 | 0.9 |
| 2 | 168 | A | 37.0 | 0.9 | 51.8 | 2.4 | 487 | 32 | 39.1 | 2.5 | 480 | 23 | 36.2 | 5.4 | 174.4 | 28.3 | 35.5 | 0.3 |
| 3 | 517 | B | 47.2 | 0.4 | 61 | 5 | 554 | 38 | 44 | 2.0 | 558 | 27 | 42 | 5.0 | 115 | 11 | 24.2 | 0.6 |
| 4 | 720 | B | | | 51 | 3 | 482 | 35 | 44 | 3.0 | 565 | 35 | 61 | 14 | 240 | 42 | | |
| 5 | 1061 | B | 55.1 | 3.2 | 54 | 4 | 469 | 32 | 43 | 3.0 | 608 | 97 | 64 | 11 | 354 | 16 | 41.7 | 0.4 |

Tableau 2

| (B) / (A) / (B) Exemples | | TRACTION ISO 527 bandelette 15 mm vitesse traction 500 mm/mn | | | | | Déchirure NFT-54-141 | | | | DART TEST | |
|---|---|---|---|---|---|---|---|---|---|---|---|---|---|
| | | | sens long | | sens trans | | sens long | | sens trans | | Méthode | Masse (en g) |
| | | | Moy | s | Moy | s | Moy cN | s | Moy cN | s | utilisée | à 50 % de casse |
| 6 1003FE23/ | Contrainte au seuil (MPa) | | 16.8 | 0.7 | 17 | 1 | | | | | | |
| LE6000/ | Allongement au seuil (%) | | 24.1 | 1.3 | 16 | 1 | 0 | 0 | 63 | 15 | A | 152 |
| 1003FE23 | Contrainte rupture (MPa) | | 39 | 1.6 | 28 | 1.1 | | | | | | |
| épaisseur : 10/10/10 µm | Allongement rupture (%) | | 425 | 27 | 560 | 15 | | | | | | |
| 7 ECD 103 / | Contrainte au seuil (MPa) | | 16.1 | 0.2 | 15.5 | 0.5 | | | | | | |
| LE6000 / | Allongement au seuil (%) | | 24.7 | 1 | 19.5 | 0.9 | 57 | 27 | 95 | 14 | A | 236 |
| ECD 103 | Contrainte rupture (MPa) | | 38 | 3 | 38 | 1 | | | | | | |
| épaisseur : 10/10/10 µm | Allongement rupture (%) | | 440 | 34 | 660 | 20 | | | | | | |

Tableau 3

| (B) / liant / (A) / liant / (B) Exemples | TRACTION ISO 527 bandelette 15 mm vitesse traction 500 mm/mn | | | | | Déchirure NFT-54-141 | | | | DART TEST | |
|---|---|---|---|---|---|---|---|---|---|---|---|
| | | sens long | | sens trans | | sens long | | sens trans | | Méthode | Masse (en g) |
| | | Moy | Ecart-type | Moy | Ecart-type | Moy cN | Ecart-type | Moy cN | Ecart-type | utilisée | pour 50 % de casse |
| 8 1003FE23/ 18302/LE6000 / 18302/1003FE23 épaisseurs : 7/3/10/3/7 (μm) | Contrainte au seuil Allongement au seuil Contrainte rupture Allongement rupture | 12 23 26 385 | 1 1 2 28 | 10 18 15 354 | 1 1 2 97 | 8 | 3 | 108 | 7 | A | 203 |
| 9 ECD103 / 18302/LE6000/ 18302/ECD 103 épaisseurs : 7/3/10/3/7 (μm) | Contrainte au seuil Allongement au seuil Contrainte rupture Allongement rupture | 11 23 23 442 | 0 1 2 27 | 11 23 22 499 | 0 1 1 11 | 56 | 7 | 112 | 14 | A B | >392 >321 |
| 10 ECD 103/ 18302/LE 6000/ 18302/ECD 103 épaisseurs : 12/3/4/3/6 (μm) | Contrainte au seuil Allongement au seuil Contrainte rupture Allongement rupture | 10 23 18 445 | 1 1 2 43 | 9 23 22 655 | 0 1 2 51 | 145 | 26 | 127 | 12 | A B | >392g >321g |
| 11 2045E/18302/ LE6000/ 18302/2045E épaisseurs : 12/3/4/3/6 (μm) | Contrainte au seuil Allongement au seuil Contrainte rupture Allongement rupture | 12 24 20 440 | 1 1 2 35 | 9 19 15 523 | 1 2 2 67 | 75 | 4 | 100 | 15 | A | 315g |

Tableau 4

**Revendications**

1. Film mono ou multicouches comprenant du polyéthylène métallocène, au moins une couche (A) d'un mélange de polyamide et de polyéthylène, éventuellement une couche (B) de polyéthylène dans lequel le polyéthylène métallocène est dans la couche (A) et/ou dans la couche (B)

2. Film selon la revendication 1 comprenant au moins une couche (A) d'un mélange de polyamide et de polyéthylène métallocène.

3. Film selon la revendication 2 comprenant aussi une couche (B) de polyéthylène avantageusement en polyéthylène métallocène.

4. Film selon la revendication 1 comprenant au moins une couche (A) d'un mélange de polyamide et de polyéthylène métallocène entre deux couches (B) de polyéthylène, l'une ou l'autre ou les deux couches (B) pouvant être en polyéthylène métallocène.

5. Film selon la revendication 1 comprenant au moins une couche (B) de polyéthylène entre deux couches (A) d'un mélange de polyamide et de polyéthylène métallocène, la couche centrale (B) pouvant être en polyéthylène métallocène.

6. Film selon la revendication 1 comprenant au moins une couche (A) d'un mélange de polyamide et de polyéthylène qui n'est pas métallocène et au moins une couche (B) de polyéthylène métallocène.

7. Film selon l'une quelconque des revendications précédentes dans lequel le polyamide de la couche (A) est du PA-6 ou du PA-6,6.

8. Film selon l'une quelconque des revendications précédentes dans lequel la couche (A) comprend aussi un compatibilisant.

9. Film selon la revendication 8 dans lequel le compatibilisant est un copolymère de l'éthylène, d'un (méth)acrylate d'alkyle et de l'anhydride maléique en proportions respectives (en poids et le total étant 100) 50 à 94,8 / 5 à 40 / 0,2 à 10.

10. Film selon l'une quelconque des revendications précédentes dans lequel les proportions de polyamide, de polyéthylène et de compatibilisant sont respectivement (en poids et le total étant 100) 40 à 70 / 30 à 60 / 0 à 20.

11. Emballages constitués du (ou comprenant le) film de l'une quelconque des revendications précédentes.

Office européen
des brevets

**RAPPORT DE RECHERCHE EUROPEENNE**

Numéro de la demande

EP 99 40 2393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 97 15621 A (CORBIC BELLINGER MARIE PIERRE ;ATOCHEM ELF SA (FR); ECHALIER BRUNO) 1 mai 1997 (1997-05-01) * page 3, ligne 10 - page 5, ligne 17 * * page 10, ligne 16 - ligne 37 * * page 14, ligne 1 - ligne 5 * | 1,2,7, 10,11 | B32B27/32 C08L23/16 C08L77/02 C08J5/18 C08L77/00 |
| X | EP 0 787 761 A (ATOCHEM ELF SA) 6 août 1997 (1997-08-06) * revendications * * page 2, ligne 26 - ligne 30 * * page 3, ligne 52 - ligne 56 * | 1,2,7,11 | |
| X | US 5 707 751 A (GARZA OSCAR TRINI  ET AL) 13 janvier 1998 (1998-01-13) * colonne 2, ligne 47 - ligne 54 * * colonne 3, ligne 66 - colonne 4, ligne 23 * * colonne 8, ligne 64 - colonne 9, ligne 5 * | 1,2,11 | |
| A | WO 95 05936 A (DU PONT CANADA ;BRAUN VLADIMIR RONALD (CA); CHOW ANTHONY (CA)) 2 mars 1995 (1995-03-02) * revendications 8,9,11 * * page 7, ligne 29 - ligne 34 * | 1,11 | DOMAINES TECHNIQUES RECHERCHES (Int.Cl.7) B32B C08L C08J |
| A | WO 97 28960 A (TREDEGAR IND INC) 14 août 1997 (1997-08-14) * page 4, ligne 12 - ligne 25; revendications 1,6,7 * | 1 | |
| A | EP 0 792 740 A (GRACE W R & CO) 3 septembre 1997 (1997-09-03) * revendications * * page 2, ligne 3 - ligne 5 * * page 5, ligne 14 - ligne 18 * | 1,11 | |

-/--

Le présent rapport a été établi pour toutes les revendications

| Lieu de la recherche | Date d'achèvement de la recherche | Examinateur |
|---|---|---|
| LA HAYE | 31 janvier 2000 | Ibarrola Torres, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 0 997 268 A1

Office européen
des brevets

**RAPPORT DE RECHERCHE EUROPEENNE**

Numéro de la demande

EP 99 40 2393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 821 037 A (ATOCHEM ELF SA) 28 janvier 1998 (1998-01-28) * page 3, ligne 26 - ligne 31; revendication 1 * ----- | 1 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 31 janvier 2000 | Ibarrola Torres, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

12

**ANNEXE AU RAPPORT DE RECHERCHE EUROPEENNE
RELATIF A LA DEMANDE DE BREVET EUROPEEN NO.**     EP 99 40 2393

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2000

| Document brevet cité au rapport de recherche | | Date de publication | Membre(s) de la famille de brevet(s) | | Date de publication |
|---|---|---|---|---|---|
| WO 9715621 | A | 01-05-1997 | FR | 2740381 A | 30-04-1997 |
| | | | AU | 7309096 A | 15-05-1997 |
| | | | CA | 2208980 A | 01-05-1997 |
| | | | CN | 1175968 A | 11-03-1998 |
| | | | EP | 0800552 A | 15-10-1997 |
| | | | NO | 972823 A | 18-06-1997 |
| | | | ZA | 9609044 A | 03-07-1998 |
| EP 0787761 | A | 06-08-1997 | CA | 2196446 A | 01-08-1997 |
| | | | CN | 1165157 A | 19-11-1997 |
| | | | JP | 9241502 A | 16-09-1997 |
| US 5707751 | A | 13-01-1998 | CA | 2146003 A | 14-04-1994 |
| | | | DE | 69307905 D | 13-03-1997 |
| | | | DE | 69307905 T | 24-07-1997 |
| | | | EP | 0662989 A | 19-07-1995 |
| | | | ES | 2096949 T | 16-03-1997 |
| | | | WO | 9407954 A | 14-04-1994 |
| WO 9505936 | A | 02-03-1995 | AUCUN | | |
| WO 9728960 | A | 14-08-1997 | AU | 1344997 A | 28-08-1997 |
| EP 0792740 | A | 03-09-1997 | CA | 2198679 A | 28-08-1997 |
| | | | AU | 1492697 A | 04-09-1997 |
| | | | NZ | 314315 A | 26-02-1998 |
| EP 0821037 | A | 28-01-1998 | BR | 9704051 A | 22-12-1998 |
| | | | CA | 2209977 A | 23-01-1998 |
| | | | CN | 1174215 A | 25-02-1998 |
| | | | JP | 10067931 A | 10-03-1998 |
| | | | US | 5919865 A | 06-07-1999 |

EPO FORM P0460

Pour tout renseignement concernant cette annexe : voir Journal Officiel de l'Office européen des brevets, No.12/82